# EUROPEAN PATENT APPLICATION

(11) **EP 4 703 023 A1**
(43) Date of publication of application: **04.03.2026**
(21) Application number: 23939411.7
(22) Date of filing: 27.12.2023
(51) Int. Cl.: B01D 53/14

(54) **ABSORPTION LIQUID FOR CAPTURING CARBON DIOXIDE AND USE THEREOF, AND METHOD FOR CAPTURING CARBON DIOXIDE**

(30) Priority: 02.06.2023 CN 202310649622
(71) Applicant: China Petroleum & Chemical Corporation, Beijing 100728 (CN); Sinopec Nanjing Research Institute of Chemical Industry Co., Ltd., Nanjing, Jiangsu 210048 (CN); Sinopec Nanjing Chemical Industries Co., Ltd., Nanjing, Jiangsu 210048 (CN)
(72) Inventor: JI, Yan, Nanjing, Jiangsu 210048 (CN); ZHAO, Jingyan, Nanjing, Jiangsu 210048 (CN); HUANG, Hangen, Nanjing, Jiangsu 210048 (CN); GUO, Benshuai, Nanjing, Jiangsu 210048 (CN); YE, Ning, Nanjing, Jiangsu 210048 (CN); MAO, Songbai, Nanjing, Jiangsu 210048 (CN)
(74) Representative: karo IP
(86) International application number: PCT/CN2023/142281
(87) International publication number: WO 2024/244443

(57) **Abstract**

The present invention relates to the technical field of carbon dioxide capture. Disclosed are an absorption liquid for capturing carbon dioxide and the use thereof, and a method for capturing carbon dioxide. The absorption liquid comprises: an absorbent, an activator, an auxiliary agent, and/or a non-aqueous solvent, wherein the absorbent is at least one selected from the group consisting of 3-amino-1-propanol, monoethanolamine and diethanolamine. Compared with a traditional two-phase composite absorbent, the absorption liquid has the significant advantages of a low viscosity, a large carbon dioxide absorption capacity, a low regeneration temperature, etc., and has positive significances in reducing the energy consumption and cost during the flue gas carbon dioxide capture process.

## Description

### CROSS-REFERENCE TO RELATED APPLICATIONS

The application claims the benefit of the China patent application No. "202310649622.6", filed on June 2, 2023, the content of which is specifically and entirely incorporated herein by reference.

### TECHNICAL FIELD

The present invention relates to the technical field of carbon dioxide capture, in particular to an absorption liquid for capturing carbon dioxide and the use thereof, and a method for capturing carbon dioxide.

### BACKGROUND ART

The existing mature technologies of using chemical absorption method removing carbon dioxide that have been applied in the pilot scale and industrialization process involve with the absorption of carbon dioxide by using monoethanolamine (MEA) as an absorbent, but the high regeneration energy consumption of MEA (3.7-4.2GJ/tCO₂) and the high capture cost limit the subsequent development of said technologies.

In order to improve absorption/desorption performance of an absorption liquid, effectively reduce the desorption energy consumption, and save the capture cost, the current research is mainly focused on the two aspects with respect to the development of new absorbent, and the technological process improvement or the new technological process.

One type of absorbent that exhibits a phase separation phenomenon during/after CO₂ absorption is commonly referred to as a two-phase composite absorbent. In the two-phase composite absorbent systems, CO₂ is absorbed to form a CO₂ lean phase and a CO₂ rich phase, the regenerative energy consumption of the system is reduced by merely thermally heating the CO₂ rich phase, it is one of the potential technologies of capturing CO₂ with low energy consumption.

At present, some defects of the two-phase composite absorbents have hampered their large scale operation. Therefore, it is necessary to provide a phase separation absorption liquid for capturing carbon dioxide.

### SUMMARY OF THE INVENTION

The present invention aims solve the problems in the prior art with respect to the high regenerative energy consumption of the solvent in the conventional processes of absorbing carbon dioxide with an absorbent in an organic amine solution system, the regenerative temperature shall reach the boiling point of solvent, the absorption liquid has a high viscosity, a small absorption capacity of carbon dioxide, and is prone to foam, and provides an absorption liquid for capturing carbon dioxide and the use thereof, and a method for capturing carbon dioxide.

In order to achieve the above object, the first aspect of the present invention provides an absorption liquid for capturing carbon dioxide, the absorption liquid comprises: an absorbent, an activator, an auxiliary agent, and a non-aqueous solvent;
wherein the absorbent is at least one selected from the group consisting of 3-amino-1-propanol, diglycolamine, monoethanolamine and diethanolamine; wherein the mass ratio of the absorbent to the activator is 1: (1-4);
wherein the absorption liquid has a viscosity within the range of 6-50 mPa·s; wherein the absorbent has a pKa within the range of 8.5-10.

The second aspect of the present invention provides a use of the absorption liquid according to the first aspect of the invention in the field of carbon dioxide capture.

The third aspect the present invention provides a method for capturing carbon dioxide, the method comprises the following steps:
(1) Contacting the CO₂-containing gas with an absorption liquid phase to obtain an upper layer liquid phase and a lower layer rich liquid phase absorbed carbon dioxide;
(2) Thermally regenerating the rich liquid phase to obtain a first lean liquid phase;
(3) Distillating a part of the first lean liquid phase to obtain a second lean liquid phase, and returning the second lean liquid phase to the absorption liquid in step (1) for recycling;

Wherein the absorption liquid is the absorption liquid provided in the first aspect of the invention.

Due to the aforementioned technical scheme, the present invention has the following favorable effects:
(1) The absorption liquid prepared in the invention has an advantage of low viscosity (the absorption liquid has a viscosity within the range of 6-50 mPa·s; the rich liquid phase has a viscosity within the range of 200-600 mPa·s) due to the synergistic effect of an absorbent, an activator, an auxiliary agent, and a non-aqueous solvent, while the conventional two-phase composite absorbent has a viscosity of more than 100 mPa·s (the rich liquid phase has a viscosity more than 1,000 mPa·s).
(2) The mass ratio of the absorbent to the activator in the absorption liquid of the invention is within the range of 1: (1-4), such that the absorption liquid can separate after absorbing carbon dioxide. When the mass ratio does not fall into the aforementioned range, the absorption liquid cannot separate.
(3) The absorption liquid of the present invention also has significant advantages over the traditional two-phase composite absorbent, such as the large carbon dioxide absorption capacity, the regeneration temperature does not need to reach the boiling point of solvent, the absorption liquid is not prone to foam, the advantages has positive significance for reducing the energy consumption and cost during the carbon dioxide capture process.
(4) The present invention also solves the problem of accumulation of water content of the non-aqueous solvent system (i.e., the water dynamic unbalance of the non-aqueous solvent system), during the carbon dioxide capture process, when the true flue gas has a moisture content of about 8%, the moisture can also be absorbed by the non-aqueous solvent, but the regeneration temperature of the non-aqueous system does not reach the temperature of generating water vapor, that is, the process of the invention can be used for maintaining the dynamic equilibrium of the non-aqueous system, and the water vapor generated by the distillation can be used as a part of the heat source of the reboiler, thereby playing a role of saving energy.

### BRIEF DESCRIPTION OF THE DRAWINGS

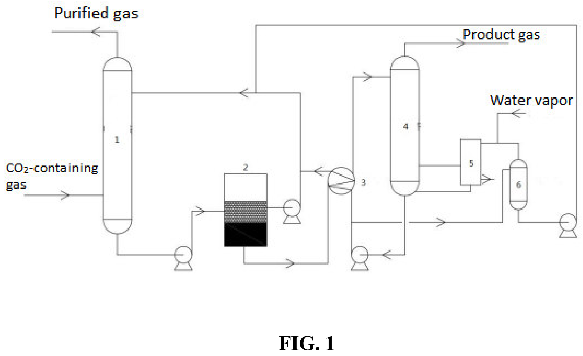

FIG. 1 illustrates an apparatus for implementing a method for capturing carbon dioxide in the present invention.

### THE DESCRIPTION OF REFERENCE SIGNS

1. Absorption column;
2. Phase separation tank;
3. Heat exchanger;
4. Regeneration tower;
5. Reboiler;
6. Distillation column

### DESCRIPTION OF THE PREFERRED EMBODIMENT

The specific embodiments of the present invention will be described in detail below. It should be understood that the specific embodiment described herein merely serve to illustrate and explain the invention, instead of imposing limitations thereto.

The first aspect of the present invention provides an absorption liquid for capturing carbon dioxide, the absorption liquid comprises: an absorbent, an activator, an auxiliary agent, and a non-aqueous solvent;
wherein the absorbent is at least one selected from the group consisting of 3-amino-1-propanol (3AP), diglycolamine (DGA), monoethanolamine (MEA) and diethanolamine (DEA);
wherein the mass ratio of the absorbent to the activator is 1: (1-4);
wherein the absorption liquid has a viscosity within the range of 6-50 mPa·s;
wherein the absorbent has a pKa within the range of 8.5-10.

In order to overcome the defect in the prior art that the absorption liquid has a larger viscosity than an aqueous solution due to the fact that the absorption liquid contains an organic solvent, and the large viscosity influences the effect of two-phase composite absorption of carbon dioxide, so that the absorption and regeneration performance of the absorption liquid is degraded, an auxiliary agent is added into the absorption liquid provided by the invention on the basis of the defined components in the absorption liquid and dosages thereof, thereby enhancing the effect of two-phase composite absorption and improving the viscosity performance; preferably, the auxiliary agent is selected from polyether, more preferably selected from polyoxyethylene ether or polyoxypropylene ether; further preferably, the polyoxyethylene ether or polyoxypropylene ether has a weight average molecular weight within the range of 3,000-5,000 g/mol; more preferably within the range of 4,000-5,000 g/mol. The polyether is commercially available, such as poly(ethylene glycol)-block-poly(propylene glycol)-block-poly(ethylene glycol) purchased from Aladdin Chemicals Reagent Co., Ltd., it has a product number P131344, Cas No. 9003-11-6, and a weight average molecular weight of 4,400 g/mol.

After the auxiliary agent is added, the defoaming time of an upper layer liquid phase obtained after the absorption liquid absorbs carbon dioxide is within the range of 30-70s, and the defoaming time of the obtained lower layer rich liquid phase is within the range of 1-8s; the defoaming time of the lower layer rich liquid phase after the thermal regeneration is within the range of 8-30s, and the defoaming time of the lower layer rich liquid phase after mixing with the upper layer liquid phase is within the range of 6-20s. While in the prior art without adding auxiliary agent, the defoaming time of an upper layer liquid phase obtained after the absorption liquid absorbs carbon dioxide is within the range of 100-500s, and the defoaming time of the obtained lower layer rich liquid phase is within the range of 1-5s; the defoaming time of the lower layer rich liquid phase after the thermal regeneration is within the range of 30-60s, and the defoaming time of the lower layer rich liquid phase after mixing with the upper layer liquid phase is within the range of 30-60s.

In some preferred embodiments of the invention, preferably, said auxiliary agent is added in an amount of 0.01-1 wt%o, more preferably 0.05-0.5 wt%o. The addition amount of the auxiliary agent in the invention is very low, on one hand, the invention intends to allow the rich liquid phase to defoam in time; on the other hand, the auxiliary agent can produce synergistic effect with the non-aqueous solvent, the absorbent and the activator in the invention to jointly reduce viscosity of the absorption liquid, and can assist in improving the two-phase composite absorption performance of the absorption liquid. In conclusion, when the addition amount of said auxiliary agent falls into the aforementioned range, the absorption liquid provided by the invention can certainly reduce viscosity and provide a desirable phase separation effect.

In some preferred embodiments of the invention, preferably, the activator is preferably selected from the group consisting of tertiary amines and/or tertiary amine compositions having a LogP value from -0.1 to 0.6, more preferably at least one selected from the group consisting of 3-dimethylamino-1-propanol (3DMA1P), diethylethanolamine (DEEA), 1-dimethylamino-2-propanol (1DMA2P), triethanolamine (TEA), tetramethyl propylenediamine (TMPDA), tetramethyl ethylenediamine (TMEEA) and pentamethyl diethylenetriamine (PMDETA).

In some preferred embodiments of the invention, preferably, the non-aqueous solvent is preferably at least one selected from the group consisting of ethylene glycol (EG), glycerol (GL), 2-propanediol (12P) and 1,4-butanediol (BDO), the non-aqueous solvent can reduce regeneration energy consumption of the solvent in the conventional process of absorbing carbon dioxide with an absorbent in an organic amine solution system, when the non-aqueous solvent is used for replacing water, on the one hand, it can reduce viscosity of rich liquid, and on the other hand, it can avoid latent heat consumption of solvent during the regeneration process.

In some preferred embodiments of the invention, preferably, the content of said non-aqueous solvent is not higher than 30wt%, more preferably 10-20wt%; the content of the absorbent is 10-60wt%, more preferably 20-35wt%; based on the total amount of the absorption liquid.

In order to improve the absorption performance of the absorption liquid, the tertiary amine is used as an activator, and the content of the activator is 10-80wt%, preferably 50-70wt% based on the total amount of the absorption liquid.

Wherein the viscosity of said absorption liquid is within the range of 6-50 mPa·s (25°C). The reduced viscosity can improve fluidity of the solution and enhance the mass transfer effect of the solution.

When the absorption liquid provided by the invention has the defined composition, it can provide a desirable two-phase composite absorption effect. Preferably, a carbamate formed by the absorbent after absorbing CO₂ has a solubility of not more than 1 mol/kg in the activator. According to the composition of the absorption liquid provided by the invention and the dissolution relation between the absorbent and the activator defined in the invention, the invention can provide the better technical effect of absorbing the carbon dioxide by two-phase composite. When the dosage relationship between the absorbent and the activator and the above-mentioned dissolution relationship cannot be taken into consideration, the two-phase composite absorption effect of the present invention cannot be obtained.

Because the absorption liquid after absorbing CO₂ is divided into two liquid phases with significantly different CO₂ loading capacity at the upper layer and the lower layer, almost all CO₂ is concentrated in the lower layer, the upper layer liquid phase is directly recycled after a separation process, the lower layer rich liquid phase absorbed carbon dioxide is thermally regenerated, the generated lean liquid phase is recycled and combined with the upper layer liquid phase for use. Compared with the traditional chemical absorption method, the phase separation process of the invention can reduce the liquid amount entering the thermal regeneration process under the same removal amount of CO₂, thereby reducing the regeneration energy consumption. wherein a carbamate formed by the absorbent after absorbing CO₂ has a solubility of not more than 1 mol/kg in the activator.

The second aspect of the present invention provides a use of the absorption liquid according to the first aspect of the invention in the field of carbon dioxide capture.

The third aspect the present invention provides a method for capturing carbon dioxide, the method comprises the following steps:
(1) Contacting the CO₂-containing gas with an absorption liquid phase to obtain an upper layer liquid phase and a lower layer rich liquid phase absorbed carbon dioxide;
(2) Thermally regenerating the rich liquid phase to obtain a first lean liquid phase;
(3) Distillating a part of the first lean liquid phase to obtain a second lean liquid phase, and returning the second lean liquid phase to the absorption liquid in step (1) for recycling;
wherein the absorption liquid is the absorption liquid provided in the first aspect of the invention.

In some preferred embodiments of the present invention, preferably, the thermal regeneration process in step (2) is as follows: initially performing the first thermal regeneration process, and then implementing the second thermal regeneration process, wherein the apparatus for the first thermal regeneration process is a regeneration tower, and the apparatus for the second thermal regeneration process is a reboiler, preferably selected from a common reboiler, a supergravity reboiler or a falling film reboiler. In the invention, the regeneration temperature may be lower than that of the non-aqueous solution. In some preferred embodiments of the invention, preferably, the water vapor generated by the distillation is used as part of the heat source of the reboiler.

In some preferred embodiments of the present invention, preferably, the contacting in step (1) is performed at a temperature of 30-60°C; the viscosity (25°C) of said rich liquid phase is within the range of 200-600 mPa·s.

In some preferred embodiments of the invention, preferably, the temperature of the second thermal regeneration process in step (2) is within the range of 85-105°C, more preferably within the range of 90-100°C.

In some preferred embodiments of the invention, preferably, a part of the first lean liquid phase in step (3) is a portion of 5-30wt% of the first lean liquid phase; the distillation temperature is within the range of 105-115°C.

In some preferred embodiments of the invention, preferably, the concentration of the distillation column outlet water used for the distillation is 99.99%.

The method provided by the invention can be implemented in the apparatus shown in FIG. 1, and the specific process is as follows:
(1) Introducing a CO₂-containing gas into an absorption column 1, contacting the CO₂-containing gas with an absorption liquid in the absorption column 1, and then guiding the absorption liquid into a phase separation tank 2 to obtain an upper liquid phase and a lower layer rich liquid phase absorbed carbon dioxide;
(2) Pouring the rich liquid phase in step (1) into a regeneration tower 4 and a reboiler 5 in sequence via a heat exchanger 3 for subjecting to a thermal regeneration to obtain a first lean liquid phase;
(3) Delivering a part of the first lean liquid phase to a distillation column 6 for distillation to obtain a second lean liquid phase, and returning the second lean liquid phase to the absorption liquid in absorption column 1 of step (1) for recycling;
wherein the absorption liquid is the absorption liquid provided in the first aspect of the invention.

The invention will be further described with reference to the following examples.

Auxiliary agent was poly(ethylene glycol)-block-poly(propylene glycol)-block-poly(ethylene glycol) with a weight average molecular weight of 4,400g/mol, commercially available from Aladdin Chemicals Reagent Co., Ltd. The boiling point of 1,4-Butanediol (BDO) was 228°C (0.1 MPa).

The boiling point of ethylene glycol (EG) was 197.3°C (0.1 MPa).

### Example 1:

Composition of absorption liquid: the mass ratio of an absorbent MEA, an activator 3DMA1P and a non-aqueous solvent EG was 3:6:1, the dosage of the absorbent MEA was 30wt%, the dosage of the activator 3DMA1P was 60wt%, the dosage of the non-aqueous solvent EG was 9.92wt%, the dosage of the auxiliary agent was 0.08 wt‰, the total volume of the absorbent liquid was 30L, the viscosity (25°C) of the absorbent liquid was 16 mPa·s, the pKa of the absorbent was 9.5, and the LogP value of the activator was -0.1.

Carbon dioxide capture was performed using an absorption liquid in the apparatus shown in FIG. 1. The true fluent gas containing carbon dioxide (12v%) was in contact with the absorption liquid, the contact temperature was stabilized at 40°C to obtain an upper layer liquid phase and a lower layer rich liquid phase absorbed carbon dioxide (its viscosity at 25°C was 350 mPa·s); The rich liquid phase was taken for analyzing the content of carbon dioxide, the maximum absorption capacity was 3.71 mol CO₂/kg; the lower layer rich liquid passed through a regeneration tower and subjected to a first thermal regeneration process, and then subjected to a second heat regeneration process at 95°C by a common reboiler to obtain a first lean liquid phase.

A part of the first lean liquid phase (8 wt% of the first lean liquid phase) was subsequently introduced into a distillation column for subjecting to distillation, wherein the distillation temperature was 108°C, the obtained second lean liquid phase was returned and added into the absorption liquid for recycling; the distillated water vapor at the top of said distillation column was used as a part of the heat source and supplied to the reboiler. When the carbon dioxide capture rate of the lower layer rich liquid was 90%, the regeneration energy consumption was 2.95 GJ/t CO₂.

Wherein the defoaming time of the upper layer liquid phase was 35s, the defoaming time of the lower layer rich liquid phase was 5s; the defoaming time of the lower layer rich liquid phase after the thermal regeneration process was 15s, and the defoaming time of the lower layer rich liquid phase after mixing with the upper layer liquid phase was 7s.

Wherein a carbamate formed by the absorbent MEA after absorption of CO₂ has a solubility of 0.77mol/kg in the activator 3DMA1P.

### Example 2:

Composition of absorption liquid: the mass ratio of an absorbent DEA to an activator PMDETA was 2:7, the dosage of the auxiliary agent was 1 wt‰, the dosage of the absorbent DEA was 20wt%, the dosage of the activator PMDETA was 70wt%, the non-aqueous solvent BDO accounted for 9.99wt% of the total mass of the absorption liquid, the total volume of the absorption liquid was 30L, the viscosity (25°C) of the absorption liquid was 10 mPa·s, the pKa of the absorbent was 9.0, and the LogP value of the activator was 0.54.

Carbon dioxide capture was performed using an absorption liquid in the apparatus shown in FIG. 1. The true fluent gas containing carbon dioxide (12v%) was in contact with the absorption liquid, the contact temperature was stabilized at 39.85°C to obtain an upper layer liquid phase and a lower layer rich liquid phase absorbed carbon dioxide (its viscosity at 25°C was 380 mPa·s);

The rich liquid phase was taken for analyzing the content of carbon dioxide, the maximum absorption capacity was 3.78 mol CO₂/kg; the lower layer rich liquid passed through a regeneration tower and subjected to a first thermal regeneration process, and then subjected to a second heat regeneration process at 100°C by a common reboiler to obtain a first lean liquid phase (wherein the residual absorption capacity was 0.26 mol CO₂/kg);

A part of the first lean liquid phase (10 wt% of the first lean liquid phase) was subsequently introduced into a distillation column for subjecting to distillation, wherein the distillation temperature was 110°C, the obtained second lean liquid phase was returned and added into the absorption liquid for recycling; the distillated water vapor at the top of said distillation column was used as a part of the heat source and supplied to the reboiler. When the carbon dioxide capture rate of the lower layer rich liquid was 80%, the regeneration energy consumption was 2.48 GJ/t CO₂.

Wherein the defoaming time of the upper layer liquid phase was 40s, the defoaming time of the lower layer rich liquid phase was 5s; the defoaming time of the lower layer rich liquid phase after the thermal regeneration process was 10s, and the defoaming time of the lower layer rich liquid phase after mixing with the upper layer liquid phase was 8s.

Wherein a carbamate formed by the absorbent DEA after absorption of CO₂ has a solubility of 0.65mol/kg in the activator PMDETA.

### Example 3:

Composition of absorption liquid: the mass ratio of an absorbent 3AP to an activator TMPDA was 1:3, the dosage of the absorbent 3AP was 22.5wt%, the dosage of the activator TMPDA was 67.5wt%, the non-aqueous solvent GL accounted for 10% of the total mass of said solution mass, the addition amount of the auxiliary agent was 0.1 wt%o, the total volume of the absorption liquid was 30L, the viscosity (25°C) of the absorption liquid was 12 mPa·s, the pKa of the absorbent was 9.96, and the LogP value of the activator was 0.43. Carbon dioxide capture was performed using an absorption liquid in the apparatus shown in FIG. 1. The true fluent gas containing carbon dioxide (12v%) was in contact with the absorption liquid, the contact temperature was stabilized at 40°C to obtain an upper layer liquid phase and a lower layer rich liquid phase absorbed carbon dioxide (its viscosity at 25°C was 300 mPa·s); The rich liquid phase was taken for analyzing the content of carbon dioxide, the maximum absorption capacity was 3.75 mol CO₂/kg; the lower layer rich liquid passed through a regeneration tower and subjected to a first thermal regeneration process, and then subjected to a second heat regeneration process at 95°C by a common reboiler to obtain a first lean liquid phase;

A part of the first lean liquid phase (5 wt% of the first lean liquid phase) was subsequently introduced into a distillation column for subjecting to distillation, wherein the distillation temperature was 110°C, the obtained second lean liquid phase was returned and added into the absorption liquid for recycling; the distillated water vapor at the top of said distillation column was used as a part of the heat source and supplied to the reboiler. When the carbon dioxide capture rate of the lower layer rich liquid was 80%, the regeneration energy consumption was 2.22 GJ/t CO₂.

Wherein the defoaming time of the upper layer liquid phase was 42s, the defoaming time of the lower layer rich liquid phase was 4s; the defoaming time of the lower layer rich liquid phase after the thermal regeneration process was 14s, and the defoaming time of the lower layer rich liquid phase after mixing with the upper layer liquid phase was 15s.

Wherein a carbamate formed by the absorbent 3AP after absorption of CO₂ has a solubility of 0.58mol/kg in the activator TMPDA.

### Example 4:

Composition of absorption liquid: the mass ratio of an absorbent MEA to an activator 3DMA1P was 2:6, the dosage of the absorbent MEA was 20wt%, the dosage of the activator 3DMA1P was 60wt%, the dosage of the non-aqueous solvent EG was 19.999%, the dosage of the auxiliary agent was 0.1‰wt, the total volume of the absorption liquid was 30L, the viscosity (25°C) of the absorption liquid was 6 mPa·s, the pKa of the absorbent was 9.5, and the LogP value of the activator was -0.1.

Carbon dioxide capture was performed using an absorption liquid in the apparatus shown in FIG. 1. The true fluent gas containing carbon dioxide (12v%) was in contact with the absorption liquid, the contact temperature was stabilized at 40°C to obtain an upper layer liquid phase and a lower layer rich liquid phase absorbed carbon dioxide (its viscosity at 25°C was 280 mPa·s); The rich liquid phase was taken for analyzing the content of carbon dioxide, the maximum absorption capacity was 4.01 mol CO₂/kg; the lower layer rich liquid passed through a regeneration tower and subjected to a first thermal regeneration process, and then subjected to a second heat regeneration process at 95°C by a common reboiler to obtain a first lean liquid phase;

A part of the first lean liquid phase (1 Owt% of the first lean liquid phase) was subsequently introduced into a distillation column for subjecting to distillation, wherein the distillation temperature was 110°C, the obtained second lean liquid phase was returned and added into the absorption liquid for recycling; the distillated water vapor at the top of said distillation column was used as a part of the heat source and supplied to the reboiler. When the carbon dioxide capture rate of the lower layer rich liquid was 82.5%, the regeneration energy consumption was 2.76 GJ/t CO₂.

Wherein the defoaming time of the upper layer liquid phase was 40s, the defoaming time of the lower layer rich liquid phase was 5s; the defoaming time of the lower layer rich liquid phase after the thermal regeneration process was 10s, and the defoaming time of the lower layer rich liquid phase after mixing with the upper layer liquid phase was 10s.

### Comparative Example 1:

Composition of absorption liquid: the mass ratio of an absorbent DEA to an activator PMDETA was 3:6, the dosage of the absorbent DEA was 30wt%, the dosage of the activator PMDETA was 60wt%, the dosage of the non-aqueous solvent EG was 10%, the auxiliary agent was not added, the total volume of the absorption liquid was 30L, the viscosity (25°C) of the absorption liquid was 19 mPa·s, the pKa of the absorbent was 9.0, and the LogP value of the activator was 0.54.

Carbon dioxide capture was performed using an absorption liquid in the apparatus shown in FIG. 1. The true fluent gas containing carbon dioxide (12v%) was in contact with the absorption liquid, the contact temperature was stabilized at 40°C to obtain an upper layer liquid phase and a lower layer rich liquid phase absorbed carbon dioxide (its viscosity at 25°C was 320 mPa·s); The rich liquid phase was taken for analyzing the content of carbon dioxide, the maximum absorption capacity was 3.69 mol CO₂/kg; the lower layer rich liquid passed through a regeneration tower and subjected to a first thermal regeneration process, and then subjected to a second heat regeneration process at 95°C by a common reboiler to obtain a first lean liquid phase;

A part of the first lean liquid phase (8wt% of the first lean liquid phase) was subsequently introduced into a distillation column for subjecting to distillation, wherein the distillation temperature was 105°C, the obtained second lean liquid phase was returned and added into the absorption liquid for recycling; the distillated water vapor at the top of said distillation column was used as a part of the heat source and supplied to the reboiler. When the carbon dioxide capture rate of the lower layer rich liquid was 80%, the regeneration energy consumption was 2.45 GJ/t CO₂.

Wherein the defoaming time of the upper layer liquid phase was 120s, the defoaming time of the lower layer rich liquid phase was 4s; the defoaming time of the lower layer rich liquid phase after the thermal regeneration process was 50s, and the defoaming time of the lower layer rich liquid phase after mixing with the upper layer liquid phase was 45s.

### Comparative Example 2:

Composition of absorption liquid: the mass ratio of an absorbent MEA to an activator 3DMA1P was 1:1, the dosage of the absorbent MEA was 40wt%, the dosage of the activator 3DMA1P was 40wt%, the dosage of the non-aqueous solvent EG was 20%, the auxiliary agent was not added, the total volume of the absorption liquid was 30L, the viscosity (25°C) of the absorption liquid was 32 mPa·s, the pKa of the absorbent was 9.5, and the LogP value of the activator was -0.1.

Carbon dioxide capture was performed using an absorption liquid in the apparatus shown in FIG. 1. The true fluent gas containing carbon dioxide (12v%) was in contact with the absorption liquid, the contact temperature was stabilized at 40°C to obtain an upper layer liquid phase and a lower layer rich liquid phase absorbed carbon dioxide (its viscosity at 25°C was 250 mPa·s); The rich liquid phase was taken for analyzing the content of carbon dioxide, the maximum absorption capacity was 3.55 mol CO₂/kg; the lower layer rich liquid passed through a regeneration tower and subjected to a first thermal regeneration process, and then subjected to a second heat regeneration process at 95°C by a common reboiler to obtain a first lean liquid phase;

A part of the first lean liquid phase (5wt% of the first lean liquid phase) was subsequently introduced into a distillation column for subjecting to distillation, wherein the distillation temperature was 105°C, the obtained second lean liquid phase was returned and added into the absorption liquid for recycling; the distillated water vapor at the top of said distillation column was used as a part of the heat source and supplied to the reboiler. When the carbon dioxide capture rate of the lower layer rich liquid was 80%, the regeneration energy consumption was 2.57 GJ/t CO₂.

Wherein the defoaming time of the upper layer liquid phase was 130s, the defoaming time of the lower layer rich liquid phase was 4s; the defoaming time of the lower layer rich liquid phase after the thermal regeneration process was 50s, and the defoaming time of the lower layer rich liquid phase after mixing with the upper layer liquid phase was 50s.

### Comparative Example 3:

The absorption liquid was 30L of an aqueous MEA solution having a concentration of 305.4g/L, the viscosity (25°C) of the absorption liquid was 1 mPa·s.

Carbon dioxide capture was performed using an absorption liquid in the apparatus shown in FIG. 1. The true fluent gas containing carbon dioxide (12v%) was in contact with the absorption liquid, the contact temperature was stabilized at 39.85°C to obtain a rich liquid (its viscosity at 25°C was 10 mPa·s);

The rich liquid phase was taken for analyzing the content of carbon dioxide, the maximum absorption capacity was 2.52 mol CO₂/kg; the aqueous solution did not separate after absorbing carbon dioxide, the aqueous solution passed through a regeneration tower and subjected to a first thermal regeneration process, and then subjected to a second heat regeneration process at 120°C by a common reboiler, wherein the residual absorption capacity was 1.29 mol CO₂/kg, when the carbon dioxide capture rate was 90%, the regeneration energy consumption was 5.1 GJ/t CO₂.

Wherein the defoaming time of the rich liquid phase was 5s; the defoaming time of the rich liquid phase after the thermal regeneration process was 6s.

### Comparative Example 4:

The absorption liquid was 30L of an aqueous MEA solution having a concentration of 305.4g/L, the viscosity (25°C) of the absorption liquid was 1 mPa·s.

Carbon dioxide capture was performed using an absorption liquid in the apparatus shown in FIG. 1. The true fluent gas containing carbon dioxide (12v%) was in contact with the absorption liquid, the contact temperature was stabilized at 40°C to obtain a rich liquid (its viscosity at 25°C was 280 mPa·s); The aqueous solution did not separate after absorbing carbon dioxide, the aqueous solution passed through a regeneration tower and subjected to a first thermal regeneration process, and then subjected to a second heat regeneration process at 115°C by a common reboiler, wherein the residual absorption capacity was 0.56 mol CO₂/kg, when the carbon dioxide capture rate was 80%, the regeneration energy consumption was 4.25 GJ/t CO₂.

Wherein the defoaming time of the rich liquid phase was 5s; the defoaming time of the rich liquid phase after the thermal regeneration process was 6s.

### Comparative Example 5:

Composition of absorption liquid: the mass ratio of an absorbent MEA, an activator 3DMA1P and a non-aqueous solvent EG was 1:6: 1, the dosage of the absorbent MEA was 12.5wt%, the dosage of the activator 3DMA1P was 75wt%, the dosage of the non-aqueous solvent EG was 12.5wt%, the dosage of the auxiliary agent was 0.08 wt‰, the total volume of the absorption liquid was 30L, and the viscosity (25°C) of the absorbent liquid was 12 mPa·s.

Carbon dioxide capture was performed using an absorption liquid in the apparatus shown in FIG. 1. The true fluent gas containing carbon dioxide (12v%) was in contact with the absorption liquid, the contact temperature was stabilized at 40°C; the aqueous solution did not separate after absorbing carbon dioxide, the aqueous solution passed through a regeneration tower and subjected to a first thermal regeneration process, and then subjected to a second heat regeneration process at 120°C by a common reboiler, wherein the residual absorption capacity was 0.47 mol CO₂/kg, when the carbon dioxide capture rate was 90%, the regeneration energy consumption was 3.63 GJ/t CO₂.

### Comparative Example 6:

Composition of absorption liquid: the mass ratio of an absorbent MEA, an activator 3DMA1P and a non-aqueous solvent EG was 3:1:1, the dosage of the absorbent MEA was 60wt%, the dosage of the activator 3DMA1P was 20wt%, the dosage of the non-aqueous solvent EG was 20wt%, the dosage of the auxiliary agent was 0.08 wt‰, the total volume of the absorption liquid was 30L, and the viscosity (25°C) of the absorbent liquid was 12 mPa·s.

Carbon dioxide capture was performed using an absorption liquid in the apparatus shown in FIG. 1. The true fluent gas containing carbon dioxide (12v%) was in contact with the absorption liquid, the contact temperature was stabilized at 40°C; the aqueous solution did not separate after absorbing carbon dioxide, the aqueous solution passed through a regeneration tower and subjected to a first thermal regeneration process, and then subjected to a second heat regeneration process at 120°C by a common reboiler, wherein the residual absorption capacity was 0.55 mol CO₂/kg, when the carbon dioxide capture rate was 90%, the regeneration energy consumption was 3.65 GJ/t CO₂.

### Comparative Example 7

Composition of absorption liquid: the mass ratio of an absorbent MEA, an activator 3DMA1P and a non-aqueous solvent EG was 3:6:1, the dosage of the absorbent MEA was 30wt%, the dosage of the activator 3DMA1P was 60wt%, the dosage of the non-aqueous solvent EG was 10wt%, the auxiliary agent was not added, the total volume of the absorption liquid was 30L, and the viscosity (25°C) of the absorbent liquid was 12 mPa·s; the pKa of the absorbent was 9.5, and the LogP value of the activator was -0.1.

Carbon dioxide capture was performed using an absorption liquid in the apparatus shown in FIG. 1. The true fluent gas containing carbon dioxide (12v%) was in contact with the absorption liquid, the contact temperature was stabilized at 40°C to obtain an upper layer liquid phase and a lower layer rich liquid phase absorbed carbon dioxide (its viscosity at 25°C was 350 mPa·s); The rich liquid phase was taken for analyzing the content of carbon dioxide, the maximum absorption capacity was 3.54 mol CO₂/kg; the lower layer rich liquid passed through a regeneration tower and subjected to a first thermal regeneration process, and then subjected to a second heat regeneration process at 95°C by a common reboiler to obtain a first lean liquid phase;

A part of the first lean liquid phase (8 wt% of the first lean liquid phase) was subsequently introduced into a distillation column for subjecting to distillation, wherein the distillation temperature was 108°C, the obtained second lean liquid phase was returned and added into the absorption liquid for recycling; the distillated water vapor at the top of said distillation column was used as a part of the heat source and supplied to the reboiler. When the carbon dioxide capture rate of the lower layer rich liquid was 90%, the regeneration energy consumption was 2.26 GJ/t CO₂.

### Comparative Example 8:

Composition of absorption liquid: the mass ratio of an absorbent 3-aminopropanol, an activator 3-dimethylamino propylamine and a non-aqueous solvent EG was 3:6:1, the dosage of the absorbent 3-aminopropanol was 30wt%, the dosage of the activator 3-dimethylamino propylamine was 60wt%, the dosage of the non-aqueous solvent EG was 9.99wt%, the dosage of the auxiliary agent was 0.08 wt%o, the total volume of the absorbent liquid was 30L, the pKa of the absorbent was 9.96, and the LogP value of the activator was -0.1.

Carbon dioxide capture was performed using an absorption liquid in the apparatus shown in FIG. 1. The true fluent gas containing carbon dioxide (12v%) was in contact with the absorption liquid, the contact temperature was stabilized at 40°C to obtain an upper layer liquid phase and a lower layer rich liquid phase absorbed carbon dioxide;

The rich liquid phase was taken for analyzing the content of carbon dioxide, the maximum absorption capacity was 2.71 mol CO₂/kg; the lower layer rich liquid passed through a regeneration tower and subjected to a first thermal regeneration process, and then subjected to a second heat regeneration process at 95°C by a common reboiler to obtain a first lean liquid phase;

A part of the first lean liquid phase (8 wt% of the first lean liquid phase) was subsequently introduced into a distillation column for subjecting to distillation, wherein the distillation temperature was 108°C, the obtained second lean liquid phase was returned and added into the absorption liquid for recycling; the distillated water vapor at the top of said distillation column was used as a part of the heat source and supplied to the reboiler. When the carbon dioxide capture rate of the lower layer rich liquid was 90%, the regeneration energy consumption was 2.98 GJ/t CO₂.

Wherein the defoaming time of the upper layer liquid phase was 35s, the defoaming time of the lower layer rich liquid phase was 5s; the defoaming time of the lower layer rich liquid phase after the thermal regeneration process was 15s, and the defoaming time of the lower layer rich liquid phase after mixing with the upper layer liquid phase was 7s.

Wherein a carbamate formed by the absorbent 3-aminopropanol after absorption of CO₂ has a solubility of 1.38mol/kg in the activator 3-dimethylamino propylamine.

### Comparative Example 9:

Composition of absorption liquid: the mass ratio of an absorbent MEA, an activator N-methyl diethanolamine (MDEA) and a non-aqueous solvent EG was 3:6:1, the dosage of the absorbent MEA was 30wt%, the dosage of the activator MDEA was 60wt%, the dosage of the non-aqueous solvent EG was 10wt%, the total volume of the absorption liquid was 30L, the pKa of the absorbent was 9.5, the LogP value of the activator was -0.72, the absorption liquid was a uniform liquid phase before and after absorbing CO₂, and the phases were not separated.

### Comparative Example 10:

Composition of absorption liquid: the mass ratio of an absorbent n-butylamine, an activator N-methyl diethanolamine (MDEA) and a non-aqueous solvent EG was 3:6:1, the dosage of the absorbent n-butylamine was 30wt%, the dosage of the activator MDEA was 60wt%, the dosage of the non-aqueous solvent EG was 10wt%, the total volume of the absorption liquid was 30L, the pKa of the absorbent was 10.6, the LogP value of the activator was -0.72, the absorption liquid was a uniform liquid phase before absorbing CO₂, and the liquid-solid separated phases were generated after the absorption liquid absorbed CO₂. As can be seen from the above Examples and Comparative Examples, the solution may separate after of the non-aqueous absorption liquid system adopted in the invention absorbs carbon dioxide, and the regeneration temperature does not need to reach the boiling point of the non-aqueous solvent, thus the invention has the obvious advantage of low regeneration energy consumption compared with the traditional organic alcohol amine aqueous system (Comparative Examples 3 and 4); in addition, the complete solution formula provided by the invention solves the problems such as the non-aqueous system has a large viscosity and is prone to foam, compared with Comparative Examples 1 and 2 that an auxiliary agent is not added, the auxiliary agent is added in Examples 1-4, each of the defoaming times of the upper liquid phase and the lower rich liquid phase after the thermal regeneration process and the defoaming times of the upper liquid phase and the lower rich liquid phase after mixing with the upper liquid phase are shorter, so that an air inflow of the absorption column is not reduced obviously, and the efficiency of the absorption liquid for absorbing carbon dioxide is ensured. When the mass ratio of the absorbent to the activator in the absorption liquid is more than 1:1 or less than 1:4 (Comparative Examples 5 and 6), the absorption liquid cannot separate after absorbing carbon dioxide, thus it can be determined that the mass ratio of the absorbent to the activator is the key for whether the phase separation can be performed. Comparative Example 7 merely differs from Example 1 in that the auxiliary agent is not added, but the viscosity of the obtained absorption liquid is significantly greater than that in Example 1, indicating that the auxiliary agent, the absorbent, the activator and the non-aqueous solvent can produce the synergistic effect to reduce viscosity of the absorption liquid. The carbamate formed by the absorbent after absorbing carbon dioxide in Comparative Example 8 has a solubility significantly greater than 1mol/kg in the activator, both the maximum absorption capacity and the regeneration energy consumption of said carbamate are significantly inferior to those of Example 1, indicating that the two-phase composite absorption effect of the invention cannot be obtained when the dosage relationship between the absorbent and the activator and the aforementioned solubility relationship are not taken into consideration. As can be seen from Comparative Examples 9 and 10, unless both pKa value of the absorbent and LogP value of the activator fall into the scopes of the claims, the liquid-liquid two-phase composite cannot be generated by the absorption liquid system after absorbing CO₂.

The distillation of a part of solvent proposed in the invention solves the problem of unbalanced water enrichment of an organic system in the existing carbon dioxide capture of true fluent gas, ensures the continuous and normal operation of the system, and the heat of water vapor generated by distillation is regarded as a portion of supplementary energy for thermal regeneration, it can produce the beneficial effect of reducing regeneration energy conservation of the absorption liquid, and has a positive significance for reducing energy consumption and cost in the carbon dioxide capture process.

The above content describes in detail the preferred embodiments of the present invention, but the present invention is not limited thereto. A variety of simple modifications can be made in regard to the technical solutions of the disclosure within the scope of the technical concept of the invention, including a combination of individual technical features in any suitable manner, in order to avoid unnecessary repetition, the various possible combinations of the technical features will not be further described in the invention. However, such simple modifications and combinations thereof shall also be regarded as the content disclosed by the invention, each of them falls into the protection scope of the present invention.

## Claims

1. An absorption liquid for capturing carbon dioxide, is **characterized in that** the absorption liquid comprises: an absorbent, an activator, an auxiliary agent, and a non-aqueous solvent;
wherein the absorbent is at least one selected from the group consisting of 3-amino-1-propanol, diglycolamine, monoethanolamine and diethanolamine; wherein the mass ratio of the absorbent to the activator is 1: (1-4);
wherein the absorption liquid has a viscosity within the range of 6-50 mPa·s; wherein the absorbent has a pKa within the range of 8.5-10.

2. The absorption liquid according to claim 1, wherein the auxiliary agent is selected from polyether, preferably selected from polyoxyethylene ether or polyoxypropylene ether;
preferably, the polyoxyethylene ether or polyoxypropylene ether has a weight average molecular weight within the range of 3,000-5,000 g/mol; more preferably within the range of 4,000-5,000 g/mol.

3. The absorption liquid according to claim 1 or 2, wherein the auxiliary agent is contained in an amount of 0.01-1wt‰, preferably 0.05-0.5wt%o, based on the total amount of the absorption liquid.

4. The absorption liquid according to any one of claims 1-3, wherein the activator is selected from the group consisting of tertiary amines and/or tertiary amine compositions having a LogP value from -0.1 to 0.6, preferably at least one selected from the group consisting of 3-dimethylamino-1-propanol, diethylethanolamine, 1-dimethylamino-2-propanol, triethanolamine, tetramethyl propylenediamine, tetramethyl ethylenediamine and pentamethyl diethylenetriamine;
preferably, the non-aqueous solvent is at least one selected from the group consisting of ethylene glycol, glycerol, 2-propanediol and 1,4-butanediol.

5. The absorption liquid according to any one of claims 1-4, wherein the content of the non-aqueous solvent is not higher than 30wt%, preferably 10-20wt%; the content of the absorbent is 10-60wt%, preferably 20-35wt%; the content of the activator is 10-80wt%, preferably 50-70wt%, based on the total amount of the absorption liquid.

6. The absorption liquid according to any one of claims 1-5, wherein a carbamate formed by the absorbent after absorbing CO₂ has a solubility of not more than 1 mol/kg in the activator.

7. A use of the absorption liquid according to any one of claims 1-6 in the field of carbon dioxide capture.

8. A method for capturing carbon dioxide, the method comprises the following steps:
(1) contacting the CO₂-containing gas with an absorption liquid phase to obtain an upper layer liquid phase and a lower layer rich liquid phase absorbed carbon dioxide;
(2) thermally regenerating the rich liquid phase to obtain a first lean liquid phase;
(3) distillating a part of the first lean liquid phase to obtain a second lean liquid phase, and returning the second lean liquid phase to the absorption liquid in step (1) for recycling;
wherein the absorption liquid is the absorption liquid according to any one of claims 1-7.

9. The method according to claim 8, wherein the contacting in step (1) is performed at a temperature of 30-60°C; the viscosity of the rich liquid phase is within the range of 200-600 mPa·s.

10. The method according to claim 8 or 9, wherein a part of the first lean liquid phase in step (3) is a portion of 5-30wt% of the first lean liquid phase; the distillation temperature is within the range of 105-115°C; the concentration of the distillation column outlet water used for the distillation is 99.99%.
